# EUROPÄISCHE PATENTSCHRIFT

(11) **EP 0 427 213 B1**
(45) Veröffentlichungstag und Bekanntmachung des Hinweises auf die Patenterteilung: **02.06.1993**
(21) Anmeldenummer: 90121246.4
(22) Anmeldetag: 07.11.1990
(51) Int. Cl.: E03D 5/00

(54) **Anlage zur Reduzierung des Frischwasserbedarfs**
Installation for the reduction of fresh water consumption
Installation pour la réduction de la consommation d'eau fraîche

(30) Priorität: 09.11.1989 DE 3937264
(43) Veröffentlichungstag der Anmeldung: 15.05.1991
(73) Patentinhaber: Schlegel, Norbert, D-72336 Balingen (DE); Schlegel, Gerd P., D-72336 Balingen (DE)
(72) Erfinder: Schlegel, Norbert, D-72336 Balingen (DE); Schlegel, Gerd P., D-72336 Balingen (DE)
(74) Vertreter: Ott, Elmar, Dipl.-Ing.

(56) Entgegenhaltungen:
- DE-A- 2 336 744
- DE-A- 2 438 622
- DE-A- 2 908 679
- DE-A- 3 419 529
- DE-U- 8 906 453
- US-A- 4 115 879

## Beschreibung

Die Erfindung betrifft eine Anlage zur Reduzierung des Frischwasserbedarfs im Speicherkasten einer in eine Abwasserleitung führenden WC-Spülung oder dergleichen gemäß der Gattung des Hauptanspruchs.

Speicherkästen von WC-Spülungen oder dergleichen sind bekanntermaßen an Frisch- bzw. Trinkwasserzuleitungen angeschlossen und werden über diese mit dem zur Spülung benötigten Wasser versorgt. Es wird somit Grund- bzw. Trinkwasser zur Abführung von Abwässern verwendet, obgleich die diesbezügliche Transport- und Weiterleitungsfunktion auch unter Verwendung von Brauchwasser oder lediglich in geringem Umfang verschmutztem Wasser erreicht werden könnte, ohne daß hierfür wertvolle Grund- und Trinkwasservorräte angegriffen werden müßten.

Aus der DE-A-2 336 744 ist eine Anlage zur Reduzierung des Frischwasserbedarfs in Verbindung mit einer WC-Spülung gemäß dem oberbegriff des Anspruchs 1 bekannt. Das Abwasser einer Badewanne kann mittels einer Pumpe einem Sammelbehälter zugeführt werden, der den Spülkasten einer WC-Spülung speißt. Mittels eines rohrförmigen Einsatzes, der in den Ablauf der Badewanne von Hand eingesetzt wird, erreicht man eine Umlenkung des Badewassers in eine zur Pumpe führende Abzweigleitung.

Der Erfindung liegt die Aufgabe zugrunde, eine kostengünstige und leicht installierbare Anlage zur Reduzierung des Frischwasserbedarfs in Speicherkästen von WC-Spülungen oder dergleichen zu schaffen.

Die Lösung dieser Aufgabe wird bei einer Anlage der eingangs genannten Gattung durch die im kennzeichnenden Teil des Hauptanspruchs angegebenen Merkmale erhalten.

Unter Verwendung des an Anfallstellen wie Dusche, Bad, Waschbecken oder dergleichen benutzten, in der Regel nur wenig verschmutzten Abwassers zur Versorgung des Wasserbedarfs des Speicherkastens einer WC-Spülung über einen dazwischen geschalteten Sammel-Behälter können im Haushalt ca. 20 - 35 % des bisher zur Abwasserabführung benötigten Frischwassers eingespart werden.

Da die Umleitung des an den erwähnten Anfallstellen abgeführten Abwassers über die Toilettenspülung lediglich die Zwischenschaltung eines zur Aufnahme des gering verschmutzten Abwassers vorgesehenen Sammelbehälters, einer Pumpe sowie einer Absperrvorrichtung erfordert, kann die Vorrichtung ohne großen Kostenaufwand in jedem Haushalt installiert werden, wobei sich der entstandene Kostenaufwand aufgrund hoher Mengen eingesparten Frischwassers in kurzer Zeit amortisiert.

Insgesamt gesehen trägt die dadurch erreichte Reduzierung des Frischwasserbedarfs zur lediglichen Abführung von Abwässern auch den Gesichtspunkten des Umweltschutzes Rechnung indem Funktionen, die eine Verwendung von Frischwasser nicht erfordern durch bereits benutztes, in der Regel wenig verschmutztes Wasser übernommen werden, ohne daß hierdurch eine Beeinträchtigung der Funktion selbst bedingt wäre.

Durch die Anordnung einer Absperrvorrichtung in dem Bereich der von der Anfallstelle wegführenden Abwasserleitung, indem von diesem die Abwasserzufuhrleitung für den Sammelbehälter abzweigt, ist es ermöglicht, daß das bereits benutzte Abwasser entweder dem Sammelbehälter zugeleitet oder in die übliche Abwasserleitung abgeleitet wird. Die entsprechende Zu- bzw. Ableitung des von den Anfallstellen kommenden Abwassers kann sich dabei danach richten, ob der Sammelbehälter bereits gefüllt ist oder diesem noch gebrauchtes Wasser zugeführt werden kann. Die Stellung der Absperrvorrichtung kann durch einen im Sammelbehälter befindlichen Niveauregler gesteuert werden. Für den Fall, daß gebrauchtes Wasser aus einer der Anfallstellen anfällt und der Sammelbehälter noch nicht gefüllt ist, wird die Absperrvorrichtung durch den Niveauregler in eine geschlossene Stellung gebracht, in der das benutzte Wasser dem Sammelbehälter zugeführt wird. Bei durch den Niveauregler festgestelltem Erreichen des maximalen Füllungsvolumens des Sammelbehälters öffnet dagegen die Absperrvorrichtung für das aus den Anfallstellen kommende Wasser den herkömmlichen Weg, der dieses direkt in der Abwasserleitung weiterführt.

Die Anlage ist so ausgebildet, daß die Absperrvorrichtung sich nur dann schließt, wenn Abwasser in den Sammelbehälter befördert werden soll. Zu diesem Zweck ist vor der Absperrvorrichtung in der Abwasserleitung ein Wasserfühler angeordnet, der bei ankommendem Abwasser die Absperrvorrichtung schließt und eine Pumpe in Gang setzt, die das anfallende Abwasser in den Sammelbehälter pumpt. In Verbindung mit dieser Anordnung kann auch der zuvor genannte Niveauregler verwendet werden, der bei aufgefülltem Sammelbehälter ein Schließen der Absperrvorrichtung verhindert. Der Niveauregler ist jedoch nicht zwingend erforderlich, da mittels eines Überlaufs ohnehin ein Überfüllen des Sammelbehälters sicher verhindert werden kann. Die Verwendung eines Niveaureglers ist jedoch zweckmäßig, da dieser bei vollständig aufgefülltem Sammelbehälter ein unnötiges Inbetriebsetzen der Pumpe vermeidet.

Das aus den Anfallstellen abfließende Wasser wird mittels einer Saug-/Druckpumpe, der ein Filter vorgeschaltet ist, in den Sammelbehälter gepumpt. Die Pumpe wird durch einen Wasserfühler in Gang gesetzt, sobald gebrauchtes Wasser aus einer Anfallstelle anfällt. Wird dagegen durch den Wasserfühler kein Anfall von gebrauchtem Wasser mehr registriert, so wird die Pumpe abgeschaltet.

Dadurch, daß die Abwasserzufuhrleitung in den Sammelbehälter von seiner Oberseite eingeführt ist und innerhalb des Sammelbehälters im Trichteraufsatz eines dort befindlichen Rohres endet, ist sichergestellt, daß kein Ansaugeffekt auftritt, der Abwasser in der Zufuhrleitung zurückführen könnte. Auch ist dadurch, daß ebenfalls eine Frischwasserzufuhrleitung in den Sammelbehälter an seiner Oberseite eingeführt ist und im Sammelbehälter in einem Trichteraufsatz eines dort befindlichen Rohres endet gewährleistet, daß durch die Anordnung der Frischwasserzufuhr oberhalb des Niveaus des Sammelbehälters kein Nutzwasser in die Frischwasserleitung gelangen kann. Durch die Einmündung der Zufuhrrohre in einen Trichteraufsatz der im Sammelbehälter befindlichen Rohre werden auch durch Wasserbewegung entstehende Geräusche oder ein Schäumen des Wassers vermieden. Beide Effekte könnten durch ein lediglich in den Sammelbehälter eingeführtes Zufuhrrohr bei Zuführung von Frisch- oder Abwasser auftreten.

Um eine Mindestmenge von ca. 10 l Wasser im Sammelbehälter zu gewährleisten, ist im unteren Bereich des Sammelbehälters ein Niveauregler angebracht, der die Frischwasserzufuhr einleitet, sobald das Niveau im Sammelbehälter unter 10 l abfällt. Der Sammelbehälter wird dann bis ca. 10 l aufgefüllt, so daß immer genügend Wasser für eine Toilettenspülung im Sammelbehälter vorhanden ist.

Zur Sicherheit ist am Sammelbehälter ein Überlauf angebracht, welcher in die Abwasserleitung mündet. An der Unterseite des Sammelbehälters befindet sich ein Ablaß, der die Möglichkeit eröffnet, den Sammelbehälter vollständig in die Abwasserleitung zu entleeren.

Der Sammelbehälter der erfindungsgemäßen Anlage ist bevorzugt so ausgeführt, daß er ein Fassungsvermögen von 100 bis 200 l aufweist. Somit ist gewährleistet, daß im Sammelbehälter eine dauernde Zirkulation stattfindet.

Aufgrund dieses Fassungsvolumens ist es ebenfalls möglich, den Sammelbehälter flach auszuformen, so daß dieser auch in eine Wand eingebaut werden kann. Auch können im Hinblick auf einen platzsparenden Einbau die Zuführungs- und Ablaufleitungen in den Sammelbehälter eingebaut sein. Die Anlage sieht ebenfalls einen Schalter vor, der es ermöglicht, die Anlage in Betrieb zu nehmen oder völlig abzuschalten. Die Anlage kann somit in Fällen abgeschaltet werden, in denen absehbar ist, daß übermäßig verschmutztes Nutzwasser aus den Anfallstellen anfällt.

Für den Fall eines Stromausfalls ist die Absperrvorrichtung der erfindungsgemäßen Anlage so ausgelegt, daß sie sich in einer geöffneten Stellung befindet, in der das an den Anfallstellen anfallende Abwasser durch die Abwasserleitung abgeführt wird.

Die Erfindung wird nachfolgend anhand der Zeichnung näher erläutert. Es zeigen:
Figur 1 eine erste Ausführungsform der erfindungsgemäßen Anlage und
Figur 2 die bevorzugte Ausführungsform im Bereich der Absperrvorrichtung.

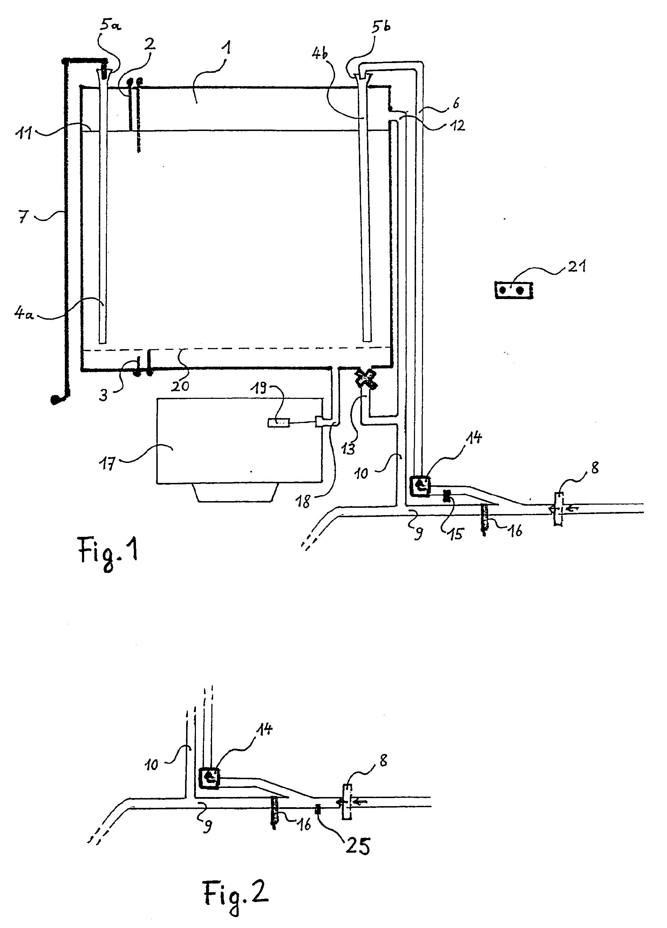

Aus Figur 1 ist der Sammelbehälter 1 ersichtlich, in dem Niveauregler 2 und 3 befindlich sind. Im Sammelbehälter 1 sind ebenfalls Rohre 4a, b vorgesehen, an denen Trichteraufsätze 5a, b vorgesehen sind. In diese sind von oben eine Abwasserzufuhrleitung 6 sowie eine Frischwasserzufuhrleitung 7 eingeführt. Die Abwasserzufuhrleitung 6 zweigt von der von einer Anfallstelle 8 abgeführten Abwasserleitung 9 ab. In die Abwasserleitung 9 mündet eine Ablaufleitung 10 ein, die im Bereich des maximalen Füllungsniveaus 11 des Sammelbehälters 1 einen Überlaufanschluß 12 sowie an der Unterseite des Sammelbehälters 1 einen Ablaßanschluß 13 aufweist. In die Abwasserzufuhrleitung 6 ist eine Pumpe 14 mit einem dieser vorgeschalteten Filter eingeschaltet, die durch einen Wasserfühler 15 in Betrieb genommen und abgeschaltet wird. Im Abzweigungsbereich der Abwasserzufuhrleitung 6 von der Abwasserleitung 9 ist eine Absperrvorrichtung 16 befindlich, die die Abführung des von der Anfallstelle 8 kommenden Abwassers in die Abwasserzufuhrleitung 6 oder in der Abwasserleitung 9 ermöglicht. Mit dem Speicherkasten 17 der WC-Spülung ist der Sammelbehälter 1 über eine Leitung 18 verbunden. Im Speicherkasten 17 ist ein Schwimmer 19 als Meßwertgeber zur Flüssigkeitsstandanzeige angeordnet. Durch eine unterbrochende Linie 20 ist das Mindestflüssigkeitsniveau im Sammelbehälter 1 dargestellt. Zur Inbetriebnahme und zum Abschalten der erfindungsgemäßen Anlage ist ein Schalter 21 vorgesehen.

Die erfindungsgemäße Anlage weist den nachfolgend beschriebenen Funktionsablauf auf.

In Anfallstellen 8, die durch Dusche, Bad, Waschbecken oder dergleichen zur Verfügung stehen, wird dort angefallenes Abwasser abgeführt und dem Sammelbehälter 1 über eine Abwasserzuführleitung 6 zugeführt, sofern in diesem das maximale Füllungsniveau 11 noch nicht erreicht ist. Das Füllungsniveau wird durch einen Niveauregler 2 abgenommen durch den die Absperrvorrichtung 16 betätigt wird. Sofern das maximale Füllungsniveau im Sammelbehälter 1 noch nicht erreicht ist, wird durch den Niveauregler 2 die Absperrvorrichtung 16 geschlossen und dadurch die Abführung des in der Anfallstelle 8 angefallenen Nutzwassers über die Abwasserzuführleitung 6 in den Sammelbehälter 1 ermöglicht. Die Abführung des Abwassers in den höher gelegenen Sammelbehälter 1 wird über die Pumpe 14 bewirkt, die durch einen Wasserfühler 5 in Gang gesetzt wird, sobald Abwasser aus einer Anfallstelle 8 abgeführt wird.

Ist das maximale Füllungsniveau des Sammelbehälters 1 erreicht, so wird durch Steuerung des Niveaureglers 2 die Absperrvorichtung 16 wieder geöffnet wodurch eine direkte Ableitung des an den Anfallstellen 8 angefallenen Abwassers in die herkömmliche Abwasserleitung 9 bewirkt wird.

Sobald der Wasserfühler 5 kein Wasser mehr wahrnimmt, wird die Pumpe 14 abgeschaltet.

Für den Fall, daß das Füllungsniveau im Sammelbehälter 1 unter ein Mindestniveau von ca. 10 l abfallen sollte, öffnet der Niveauregler 3 die Frischwasserzufuhr über die Frischwasserzufuhrleitung 7. Die Frischwasserzufuhr hält solange an, bis das aus der Zeichnung durch unterbrochene Linien 20 dargestellte Mindestflüssigkeitsniveau von ca. 10 l erreicht ist. Ist dieses erreicht, schaltet der Niveauregler 3 die Frischwasserzufuhr ab. Durch die Anordung der von oben in den Sammelbehälter 1 eingeführten Frischwasserzufuhrleitung wird erreicht, daß das im Sammelbehälter 1 befindliche Abwasser nicht in die Frischwasserzuführleitung 7 gelangen kann. Der am Rohr 4a befindliche Trichteraufsatz 5a verhindert einen eventuell auftretenden Ansaugeffekt, der durch eine durchgehende Einführung der Frischwasserzuführleitung 7 in den Sammelbehälter 1 bedingt sein könnte.

Dieselbe Wirkung wird ebenfalls im Berich der Einmündung des Abwasserzuführrohrs 6 in den Sammelbehälter 1 erreicht, da am Rohr 4b ebenfalls ein Trichteraufsatz 5b vorgesehen ist.

Über die Ablaufleitung 10 kann das im Sammelbehälter 1 befindliche Abwasser abgeführt werden. Dies ist zum einen über den Überlaufanschluß 12 oder durch den Ablaßanschluß 13 ermöglicht.

Über die Leitung 18 wird das Abwasser des Sammelbehälters 1 in den Speicherkasten 17 der WC-Spülung eingleitet und diese somit mit dem in dieser benötigten Spülwasser versorgt.

Insgesamt wird durch diesen Funktionsablauf eine dauernde Zirkulation des im Sammelbehälter 1 befindlichen Abwassers bewirkt, da das Fassungsvermögen des Sammelbehälters auf den anfallenden Verbrauch abgestimmt ist.

Über einen Schalter 21 kann die Befüllung des Sammelbehälters 1 mit gebrauchtem Abwasser abgeschaltet werden. Dies ist insbesondere in Fällen erforderlich, wenn abzusehen ist, daß an den Anfallstellen 8 übermäßig verschmutztes Nutzwasser anfällt.

Bei Stromausfall befindet sich die Absperrvorrichtung 16 in geöffneter Stellung wodurch sichergestellt ist, daß das Abwasser in die herkömmliche Abwasserleitung 9 abgeleitet wird.

In Figur 2 ist die bevorzugte Ausführungsform der Anlage im Bereich der Absperrvorrichtung 16 dargestellt. Bei dieser Ausführung befindet sich ein Wasserfühler 25 in der Abwasserleitung zwischen Anfallstelle 8 und Absperrvorrichtung 16. Kommt nun Wasser von der Anfallstelle 8, so veranlaßt der Fühler 25, daß die Absperrvorrichtung 16 geschlossen wird. Gleichzeitig wird durch den Fühler 25 die Pumpe 14 in Gang gesetzt, die das anfallende Wasser über die Abwasserzuführleitung 6 dem Sammelbehälter 1 zuführt. Dabei kann die Pumpe 14 geringfügig zeitverzögert eingeschaltet werden, so daß sichergestellt ist, daß die Pumpe 14 nicht trocken läuft.

Ist der Sammelbehälter 1 voll, wird über den als Fühler ausgebildeten Niveauregler 2 die Absperrvorrichtung 16 wieder geöffnet, so daß das weitere ankommende Abwasser über die Abwasserleitung 9 abfließen kann. Der Wasserfühler 25 ist somit bei vollem Sammelbehälter 1 praktisch wirkungslos.

Der Niveauregler 2 von Figur 1 kann auch weggelassen werden, da der Überlauf 12 ein Überfüllen des Sammelbehälters 1 sicher vermeidet. In diesem Fall würde jedoch immer bei anfallendem Abwasser durch den Wasserfühler 25 ein Schließen der Absperrvorrichtung 16 und ein Einschalten der Pumpe 14 veranlaßt werden, auch dann wenn der Sammelbehälter bereits voll ist. Um eine unnötige Inbetriebnahme der Pumpe 14 zu vermeiden, sieht daher die bevorzugte Ausführungsform vor, daß ein Niveauregler 2 in Verbindung mit dem Wasserfühler 25 verwendet wird.

Die Ausführung gemäß Figur 2 besitzt also einen Absperrschieber oder dergleichen als Absperrvorrichtung 16, der stromlos in geöffneter Stellung verbleibt, solange kein Abwasser anfällt bzw. solange kein Abwasser in den Sammelbehälter 1 gepumpt werden soll. Erst wenn Abwasser anfällt und dieses in den Sammelbehälter 1 gepumpt werden soll, wird die Absperrvorrichtung 16 mittels eines Magneten oder dergleichen geschlossen. Dadurch wird erreicht, daß bei Stromausfall die geöffnete Stellung der Absperrvorrichtung 16 vorliegt und daß bei Verwendung eines Magnetventils als Absperrvorrichtung 16 dieses überwiegend stromlos ist, da in der Praxis die Absperrvorrichtung 16 sich wesentlich länger in der geöffneten Stellung befindet als in der geschlossenen Stellung.

## Patentansprüche

1. Anlage zur Reduzierung des Frischwasserbedarfs in Speicherkästen von in eine Abwasserleitung führenden WC-Spülungen oder dergleichen, bei der zumindest eine abwasserverursachende Anfallstelle (8) über eine Abwasserzuführleitung (6) mit einem Sammelbehälter (1) verbunden ist, der über eine weitere Leitung (18) das ihm zugeführte Abwasser an zumindest einen Speicherkasten (17) der WC-Spülung abführt, wobei in der Abwasserleitung (9) hinter der abzweigenden Abwasserzuführleitung (6) eine Absperrvorrichtung (16) angeordnet ist, und eine Pumpe (14) in geschlossener Stellung der Absperrvorrichtung (16) das von der Anfallstelle (8) kommende Abwasser dem Sammelbehälter (1) zuführt, **dadurch gekennzeichnet**, daß in der Abwasserleitung (9) zwischen Anfallstelle (8) und Absperrvorrichtung (16) oder in der Abwasserzuführleitung (6) vor der Pumpe (14) ein Wasserfühler (15, 25) angeordnet ist, daß der Wasserfühler (15, 25) bei Anfall von Abwasser an einer Anfallstelle (8) die sonst geöffnete Absperrvorrichtung (16) schließt und die Pumpe (14) in Gang setzt und daß der Wasserfühler (15, 25) bei Ausbleiben von Abwasser die Pumpe (14) abschaltet.

2. Anlage nach Anspruch 1, **dadurch gekennzeichnet,** daß die Zuführung des Abwassers zum Sammelbehälter (1) über einen im oberen Bereich des Sammelbehälters (1) befindlichen Niveauregler (2) gesteuert ist, wobei sich bei gefülltem Sammelbehälter (1) die Absperrvorrichtung (16) in einer geöffneten Stellung befindet und die Pumpe (14) abgeschaltet ist, während in nicht gefülltem Zustand des Sammelbehälters (1) sich die Absperrvorrichtung (16) in einer geschlossenen Stellung befindet.

3. Anlage nach einem der Ansprüche 1 oder 2, **dadurch gekennzeichnet,** daß die Abwasserzuführleitung (6) in den Sammelbehälter (1) von dessen Oberseite eingeführt ist und innerhalb des Sammelbehälters (1) im Trichteraufsatz (5b) eines dort befindlichen Rohres (4b) endet.

4. Anlage nach einem der vorhergehenden Ansprüche, **dadurch gekennzeichnet,** daß eine Frischwasserzuführleitung (7) in den Sammelbehälter (1) an dessen Oberseite eingeführt ist und im Sammelbehälter (1) im Trichteraufsatz (5a) eines dort befindlichen Rohres (4a) endet.

5. Anlage nach Anspruch 4, **dadurch gekennzeichnet**, daß über einen im unteren Bereich des Sammelbehälters (1) gelegenen Niveauregler (3) bei Absinken von dessen Füllungsvolumen unter 10 l dem Sammelbehälter (1) über die Frischwasserzuführleitung (7) Frischwasser zugeführt wird.

6. Anlage nach einem der vorhergehenden Ansprüche, **dadurch gekennzeichnet**, daß der Sammelbehälter (1) mit einer in die Abwasserleitung (9) mündenden Ablaufleitung (10) versehen ist, die im Bereich des maximalen Füllungsniveaus (11) einen Überlaufanschluß (12) aufweist.

7. Anlage nach Anspruch 6, **dadurch gekennzeichnet**, daß an der Unterseite des Sammelbehälters (1) ein Ablaßanschluß (13) vorgesehen ist, der in die Ablaufleitung (10) mündet.

8. Anlage nach Anspruch 1, **dadurch gekennzeichnet**, daß der Sammelbehälter (1) ein Fassungsvermögen von 100 l bis 200 l aufweist, und daß der Sammelbehälter (1) eine flache Form aufweist.

9. Anlage nach einem der vorhergehenden Ansprüche, **dadurch gekennzeichnet,** daß die Absperrvorrichtung (16) sich bei Stromausfall in einer geöffneten Stellung befindet und aus einem Schieber, einem Magnetventil oder dergleichen besteht.

## Claims

1. Installation for reducing fresh water consumption in storage cisterns of WC-flushing systems or the like leading into a waste water pipeline, in which at least one waste water producing point (8) is connected by way of a waste water supply pipe (6) to a collecting tank (1) which by way of a further pipe (18) discharges the waste water supplied to it to at least one storage cistern (17) of the WC-flushing system, a shut-off device (16) being arranged in the waste water pipeline (9) downstream of the branching waste water supply pipe (6), and a pump (14) conveying the waste water coming from the waste producing point (8) to the collecting tank (1) in the closed position of the shut-off device (16), characterized in that in the waste water pipeline (9) between the waste water producing point (8) and the shut-off device (16) or in the waste water supply line (6), upstream of the pump (14) there is arranged a water detector (15, 25), the water detector (15, 25) closes the otherwise opened shut-off device (16) and sets the pump (14) in operation when waste water collects at a waste water producing point (8), and the water detector (15, 25) switches the pump (14) off in the absence of waste water.

2. An installation according to Claim 1, characterized in that the supply of waste water to the collecting tank (1) is controlled by way of a level regulator (2) located in the upper region of the collecting tank (1), the shut-off device (16) being in an open position when the collecting tank (1) is full whereas when the collecting tank (1) is not full the shut-off device (16) is in a closed position.

3. An installation according to claim 1 or 2, characterized in that the waste water supply pipe (6) is introduced into the collecting tank (1) from the top side thereof and terminates inside the collecting tank (1) in the funnel attachment (5b) of a pipe (4b) located there.

4. An installation according to one of the preceding claims, characterized in that a fresh water supply pipe (7) is introduced into the collecting tank (1) at the top side thereof and terminates in the collecting tank (1) in the funnel attachment (5a) of a pipe (4a) located there.

5. An installation according to one of the preceding claims, characterized in that by way of the fresh water supply pipe (7) fresh water is supplied to the collecting tank (1) above a level regulator (3) positioned in the lower region of the collecting tank (1) when the volume thereof falls below 10 litres.

6. An installation according to one of the preceding claims, characterized in that the collecting tank (1) is provided with a discharge pipe (10) opening into the waste water pipeline (9), which discharge pipe has an overflow connection (12) in the region of the maximum filling level (11).

7. An installation according to claim 6, characterized in that on the underside of the collecting tank (1) there is provided a drainage connection (13) which opens into the discharge pipe (10).

8. An installation according to claim 1, characterized in that the collecting tank (1) has a capacity of 100 litres to 200 litres, and the collecting tank (1) has a flat form.

9. An installation according to one of the preceding claims, characterized in that the shut-off device (16) is located in an open position in the event of a power failure and comprises a slide valve, electromagnetic valve or similar construction.

## Revendications

1. Installation pour diminuer la consommation d'eau fraîche dans des réservoirs de chasse de W.-C. conduisant à un conduit d'eau résiduaire ou similaire, installation dans laquelle au moins un poste consommateur (8), créateur d'eau résiduaire, est relié, par l'intermédiaire d'un conduit (6) d'arrivée d'eau résiduaire, à un réservoir de stockage (1) qui, par l'intermédiaire d'un autre conduit (18) délivre l'eau résiduaire, qui lui est amenée, à au moins un réservoir de chasse d'eau (17) pour le balayage d'évacuation des W.-C., installation dans laquelle, dans le conduit (9) d'eau usée un dispositif (16) d'arrêt est placé derrière le conduit (6) d'arrivée d'eau usée, et une pompe (14) achemine, quand le dispositif d'arrêt (16) est en position de fermeture, au réservoir de stockage (1) l'eau usée provenant du poste (8) de consommation, installation caractérisée en ce qu'un détecteur d'eau (15, 25) est disposé dans le conduit (9) d'eau usée, entre le poste (8) de consommation et le dispositif (16) d'arrêt ou dans le conduit (6) d'acheminement d'eau usée, en amont de la pompe (14) ; en ce qu'en cas d'arrivée d'eau usée au poste d'arrivée ou de consommation (8) le détecteur d'eau (15, 25) ferme le dispositif d'arrêt (16) qui, sinon, est ouvert, et met en marche la pompe (14) et en ce que le détecteur d'eau (15, 25) ferme la pompe (14) quand il n'y a plus d'eau usée.

2. Installation selon la revendication 1, caractérisée en ce que l'acheminement d'arrivée de l'eau usée vers le réservoir de stockage (1) est commandé par un régulateur de niveau (2) situé dans la zone supérieure du réservoir (1) de stockage, de sorte que, quand le réservoir de stockage (1) est empli, le dispositif d'arrêt (16) se trouve en position d'ouverture et la pompe (14) est fermée, cependant que lorsque le réservoir de stockage (1) n'est pas empli, le dispositif d'arrêt (16) se trouve en position de fermeture.

3. Installation selon l'une des revendications 1 ou 2, caractérisée en ce que le conduit (6) d'alimentation en eau usée pénètre dans le réservoir de stockage (1) par le côté supérieur de ce réservoir et se termine, à l'intérieur du réservoir de stockage (1) dans une partie supérieure (5b), en forme d'entonnoir, d'un tuyau (4b) qui s'y trouve.

4. Installation selon l'une des revendications précédentes, caractérisée en ce qu'un conduit (7) d'arrivée d'eau fraîche pénètre dans le réservoir de stockage (1) par le côté supérieur de celui-ci et se termine, dans le réservoir de stockage (1), dans une partie supérieure (5a), en forme d'entonnoir, d'un tuyau (4a) qui s'y trouve.

5. Installation selon la revendication 4, caractérisée en ce que, par l'intermédiaire d'un régulateur (3) de niveau, placé dans une zone inférieure du réservoir de stockage (1), de l'eau fraîche est acheminée au réservoir de stockage (1), par le conduit (7) d'arrivée d'eau fraîche, lorsque le volume de remplissage du réservoir est inférieur à 10 l.

6. Installation selon l'une des revendications précédentes, caractérisée en ce que le réservoir de stockage (1) est équipé d'un conduit (10) d'écoulement, débouchant dans le conduit (9) d'eau usée et qui présente, dans la zone du niveau maximal (11) d'emplissage, un ajutage (12) de débordement.

7. Installation selon la revendication 6, caractérisée en ce que, sur le côté inférieur du réservoir de stockage (1) est prévu un raccord (13) d'évacuation, qui débouche dans le conduit d'écoulement (10).

8. Installation selon la revendication 1, caractérisée en ce que le réservoir de stockage (1) présente une capacité de 100 l à 200 l et en ce que le réservoir de stockage (1) a une forme plate.

9. Installation selon l'une des revendications précédentes, caractérisée en ce que le dispositif d'arrêt (16) se trouve, en cas d'arrêt de débit, en position d'ouverture et consiste en un robinet vanne, une électrovanne ou un organe similaire.
